## Europäisches Patentamt
## European Patent Office
## Office européen des brevets

(11) Publication number: **0 051 952**
**B1**

(12) **EUROPEAN PATENT SPECIFICATION**

(45) Date of publication of patent specification: **29.01.86**

(21) Application number: **81305043.2**

(22) Date of filing: **26.10.81**

(51) Int. Cl.⁴: **A 47 B 31/02**, A 47 B 13/08, A 47 J 39/02

(54) **Table with rotatable hot tray.**

(30) Priority: **07.11.80 ZA 806885**

(43) Date of publication of application:
**19.05.82 Bulletin 82/20**

(45) Publication of the grant of the patent:
**29.01.86 Bulletin 86/05**

(84) Designated Contracting States:
**AT BE CH DE FR GB IT LI LU NL SE**

(56) References cited:
**GB-A- 385 144**
**GB-A- 411 675**
**US-A-1 729 491**
**US-A-1 903 419**
**US-A-2 485 880**
**US-A-4 034 200**

(73) Proprietor: **Visagie, Gerhardus Johannes Cornelius**
**266 Jean Avenue, Lyttelton Smallholdings**
**0140 Verwoerdburg Transvaal (ZA)**

(72) Inventor: **Visagie, Gerhardus Johannes Cornelius**
**266 Jean Avenue, Lyttelton Smallholdings**
**0140 Verwoerdburg Transvaal (ZA)**

(74) Representative: **Needle, Jacqueline et al**
**PAGE, WHITE & FARRER 5 Plough Place**
**New Fetter Lane**
**London EC4A 1HY (GB)**

Courier Press, Leamington Spa, England.

## Description

This invention relates to a rotatable table-cum-hot tray combination.

Combination tables comprising a plurality of components which can be used in different combinations in order to provide different types of tables for different purposes are well known in the art.

In the Applicant's own South African Patent No. 74/7931, and corresponding U.S. Patent No. 4,034,200, there is described a table provided with a recess in which a rotatable hot tray may be received and a lid or top which fits into the recess either rotatably or stationarily. The rotatable hot tray may be used on its own. The table when fitted with its lid or top may be used without the hot tray.

One disadvantage found with this known table is that it requires a special table for supporting the hot tray. A further disadvantage is that the part of the table which peripherally surrounds the recess is non-rotatable. In addition the table as disclosed is bulky and suffers from a lack of mobility.

It is an object of this invention to provide a table which overcomes the aforesaid problems and which under appropriate circumstances has certain advantages over other known arrangements.

According to the present invention there is provided a rotatable table-cum-hot tray combination comprising an independently conventionally usable supporting table, a rotatable independently usable hot tray unit removably locatable directly on said table, and a top removably locatable on said hot tray to be rotatable with it, and alternatively removably locatable directly on said table when said tray is removed from the combination, the upper face of said top defining the entire upper working surface of the combination when said top is located on said tray or directly on said table.

It will be appreciated that with this arrangement the whole of the upper working surface provided by said top will be rotatable.

Further the supporting table has a table top (other than the removable top) and is thus capable of independent conventional use.

It will be appreciated that with this arrangement even an existing table may be utilised as the supporting table.

The table of the invention may be used in five different combinations, i.e. table + hot tray + top; table + hot tray; table + top; table only; and hot tray only.

In an embodiment, means are provided on said top for locating the latter relative to said hot tray and/or said supporting table.

Said locating means may comprise a downwardly depending skirt. Alternatively, said locating means may comprise an annular formation incorporated in said top, of such shape and dimension as to restrict lateral movement of said top relative to said tray.

In an embodiment, said locating means for the top comprise an annular formation incorporated in said top, of such shape and dimension as to restrict lateral movement of said top relative to said supporting table.

Preferably, locating means are provided for restricting lateral movement of said tray when the latter is located on the supporting table. In this embodiment, said locating means for hot tray unit may comprise an annular formation incorporated in said supporting table, of such shape and dimension as to define a barrier which restricts lateral movement of said tray.

In another embodiment, an annular flange, constituted by a loose ring on the supporting table is provided to locate the top relative to the hot tray unit.

In this form of the invention the ring may be mounted rotatably relative to either the top or the supporting table.

In yet another embodiment the outer side of the rotatable hot tray may be of such design and appearance as to obviate the need for a skirt, inconspicuous locating means being provided to hold the top in position relative to the rotatable hot tray.

The top may be provided with gripping formations to facilitate its rotation by hand.

The top may also be extensible in the radial direction or alternatively tops of different diameter may be provided which may be used singly or stacked on top of one another.

For the sake of convenience the top may be provided in two or more segments to facilitate transportation and storage thereof.

The top may also be provided with one or more removable sections for the purpose of exposing certain desired portions of the rotatable hot tray when the top is in position on the rotatable hot tray.

The rotatable hot tray may include retaining and/or locking formations adapted to co-operate with complementary formations on the supporting table and on the top.

The top may also include retaining and/or locking formations adapted to co-operate with complementary formations on the tray and on the supporting table.

The supporting table itself may also include retaining and/or locking formations adapted to co-operate with complementary formations on the tray and on the top.

Preferably the supporting table includes rotatable elements on which it can be moved about, for example, castors or the like which are carried on the free ends of the legs of the table.

If required, the hot tray unit may also include one or more cooling units.

It will be appreciated that the table-cum-hot tray of the invention not only provides a neat and compact arrangement but one of which the versatility is unmatched by any of the known arrangements particularly where lack of space precludes the use of a large dining table. Thus for example tea and cake can conveniently be served in a confined space on a small table-cum-hot tray of the invention. As it has a completely rotatable top, each person can help himself without having to get up. Also, the people sitting around such a rotatable hot tray mounted on a mobile trolley can conveniently serve themselves whilst watching television without fear of the food getting cold. On other occasions the rotatable hot tray may be removed for independent use elsewhere such as for example as a "Lazy Susan" with heating capability on a conventional dining table or outside for keeping food warm during a barbecue. With all components in position in such table-cum-hot tray, the rotatable hot tray is safely tucked away and occupies no space. The combination as a whole provides great versatility with minimum space requirements, a very important feature under modern conditions as living quarters tend to become more and more compact.

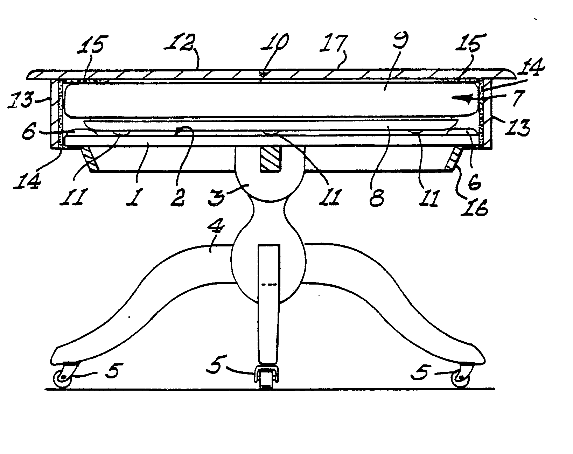

The invention will now be further described by way of example with reference to the enclosed drawing which is a diagrammatic partly cross sectional view through a rotatable table-cum-hot tray combination of the invention with the rotatable hot tray shown in elevation.

In the embodiment of the invention a small supporting table 1, such as for example a coffee table or the like, with an operative surface 2, includes a pedestal 3 which is mounted on legs 4 which carry castors 5 at their free ends.

Surface 2 is continuous and defines a table top. It includes an annular upwardly directed peripherally extending locating means 6 which may be releasably mounted on it.

A rotatable hot tray unit 7, comprising a stationary base 8 on which a top 9 is rotatably carried, includes an operative face 10 which is heatable by an electric element (not shown) located inside the tray. The hot tray unit 7 also includes feet 11 on which it can be supported on the surface 2 of the table 1.

A table top 12 which has on its underside an annular downwardly depending skirt 13, which is integral with it, is locatable on tray 7 in order to be rotatable with the rotatable top thereof. Top 12 is of such dimensions that it completely overlies face 2 of table 1 while skirt 13 is of such length that it substantially conceals from view rotatable hot tray 7 when top 12 is carried on tray 7. Skirt 13 at the same time serves as means for locating top 12 relative to tray 7.

The top 12 has an upper face 17 which defines the entire working surface of the combination when the top 12 is located on the tray 7 or directly on the table 1.

Protective means 14 and 15 are provided respectively on the inner surface of skirt 13 and the underside of top 12 to prevent tray 7 from being damaged by either skirt 13 or by the underside of top 12 when tray 7 is located on table 1 and top 12 is located on tray 7.

Gripping means 16 is provided on the underside of table 1 to facilitate the moving about of table 1, particularly when top 12 is in position on hot tray 7.

An electric power cord (not shown) which brings power to the base 8 of tray 7 may pass through any convenient opening in table 1 or through a gap between table 1 and rotatable skirt 13.

In operation the rotatable table-cum-hot tray combination can be utilised in the form shown in the drawing as a conventional coffee table or the like with a rotatable top. Alternatively top 12 can be removed to expose rotatable tray 7 which may then be utilised for keeping food, snacks, etc. at a required temperature. In yet another arrangement tray 7 may be removed from table 1 for use elsewhere and table 1 itself then utilised as a conventional table with or without top 12 located on top of it.

It will be appreciated that there are many variations in detail possible with a rotatable table-cum-hot tray combination according to the invention without departing from the scope of the invention as defined by the appended claims.

Thus, for example, the top may include a downwardly extending annular skirt of which the free end is adapted to engage the support rotatably.

**Claims**

1. A rotatable table-cum-hot tray combination comprising an independently conventionally usable supporting table (1), a rotatable independently usable hot tray unit (7) removably locatable directly on said table (1), and a top (12) removably locatable on said hot tray (7) to be rotatable with it, and alternatively removably locatable directly on said table (1) when said tray (7) is removed from the combination, the upper face (17) of said top (12) defining the entire upper working surface of the combination when said top (12) is located on said tray (7) or directly on said table (1).

2. A rotatable table-cum-hot tray according to Claim 1, characterised in that means (13) are provided on said top (12) for locating the latter relative to said hot tray (7) and/or said supporting table (1).

3. A rotatable table-cum-hot tray according to Claim 2, characterised in that the locating means comprise a downwardly depending skirt (13).

4. A rotatable table-cum-hot tray according to Claim 2, characterised in that said locating means for the top (12) comprise an annular formation incorporated in said top (12), of such shape and dimension as to restrict lateral movement of said top (12) relative to said tray (7).

5. A rotatable table-cum-hot tray according to Claim 2, characterised in that said locating means for the top (12) comprise an annular formation incorporated in said top (12), of such shape and dimension as to restrict lateral movement of said top (12) relative to said supporting table (1).

6. A rotatable table-cum-hot tray according to any preceding claim, characterised in that locating means (6) are provided for restricting lateral movement of said tray (7) when the latter is located on supporting table (1).

7. A rotatable table-cum-hot tray according to Claim 6, characterised in that said locating means for hot tray unit (7) comprise an annular formation (6) incorporated in said supporting table (1), of such shape and dimension as to define a barrier which restricts lateral movement of said tray (7).

8. A rotatable table-cum-hot tray according to any preceding claim wherein the supporting table (1) comprises a conventional table.

9. A rotatable table-cum-hot tray according to any preceding claim wherein the supporting table (1) is fitted with castors (5).

## Revendications

1. Combinaison d'une table tournante et d'une plaque chauffante, comprenant une table de support (1) utilisable indépendamment de maniere traditionelle, une unité rotative formant plaque chauffante (7) utilisable indépendamment et pouvant être montée, de manière amovible, directement sur la table (1), et une pièce supérieure (12) pouvant se monter de manière amovible sur la plaque chauffante (7) pour pouvoir tourner avec elle, ou pouvant s'adapter, de façon amovible, directement sur la table (1) lorsque la plaque (7) a été retirée de la combinaison, la face supérieure (17) de cette pièce supérieure (12) formant l'ensemble de la surface supérieure de travail de cette combinaison, lorsque cette pièce (12) est placée sur la plaque (7) ou directement sur la table (1).

2. Table tournante à plaque chauffante suivant la revendication 1, caractérisée en ce que des moyens (13) sont prévus sur la pièce supérieure (12) pour localiser cette dernière par rapport à la plaque chauffante (7) et/ou la table de support (1).

3. Table tournante à plaque chauffante, suivant la revendication 2, caractérisée en ce que les moyens de localisation consistent en une jupe pendante (13).

4. Table tournante à plaque chauffante suivant la revendication 2, caractérisée en ce que les moyens de localisation pour la pièce supérieure (12) comprennent une piece d'allure annulaire incorporée à la pièce supérieure (12) et ayant une forme et des dimensions propres à limiter le déplacement latéral de cette pièce supérieure (12) par rapport à la plaque (7).

5. Table tournante à plaque chauffante suivant la revendication 2, caractérisée en ce que les moyens de localisation pour la pièce supérieure (12) comprennent une pièce d'allure annulaire incorporée à la pièce supérieure (12) et ayant une forme et des dimensions propres à limiter le déplacement latéral de cette pièce supérieure (12) par rapport à la table de support (1).

6. Table tournante à plaque chauffante suivant l'une quelconque des revendications précédentes, caractérisée en ce que des moyens de localisation (6) sont prévus pour limiter le déplacement latéral de la plaque (7) lorsque cette dernière est placée sur la table de support (1).

7. Table tournante à plaque chauffante suivant la revendication 6, caractérisée en ce que les moyens de localisation susdits pour l'unité à plaque chauffante (7) comprennent une pièce d'allure annulaire (6) incorporée à la table de support (1) et ayant une forme et des dimensions propres à former une barrière limitant le déplacement axial de cette plaque (7).

8. Table tournante à plaque chauffante suivant l'une quelconque des revendications précédentes, caractérisée en ce que la table de support (1) consiste en une table traditionelle.

9. Table tournante à plaque chauffante suivant l'une quelconque des revendications précédentes, caractérisée en ce que la table de support (1) est pourvue de roulettes (5).

## Patentansprüche

1. Drehbare Tisch-Warmhalteschale-Kombination mit einem unabhängig, konventionell verwendbaren Tisch (1), einer drehbaren, unabhängig verwendbaren Warmhalteschaleneinheit (7), die lösbar direkt auf den Tisch (1) aufsetzbar ist, und einer lösbar auf die Warmhalteschaleneinheit aufsetzbare und mit ihr drehbare Deckplatte (12), die alternativ lösbar direkt auf den Tisch (1) aufsetzbar ist, wenn die Warmhalteschaleneinheit (7) aus der Kombination entfernt ist, wobei die Oberseite (17) der Deckplatte (12) die ganze obere Arbeitsfläche der Kombination bildet, wenn die Deckplatte (12) auf der Warmhalteschaleneinheit (7) oder direkt auf den Tisch (1) aufgesetzt ist.

2. Drehbare Tisch-Warmhalteschale-Kombination nach Anspruch 1, dadurch gekennzeichnet, dass an der Deckplatte (12) Mittel (13) zum Ausrichten derselben bezüglich der Warmhalteschaleneinheit (7) und/oder des Tisches (1) angeordnet sind.

3. Drehbare Tisch-Warmhalteschale-Kombination nach Anspruch 2, dadurch gekennzeichnet, dass die Ausrichtemittel einen nach unten vorstehenden Rand (13) umfassen.

4. Drehbare Tisch-Warmhalteschale-Kombination nach Anspruch 2, dadurch gekennzeichnet, dass die Ausrichtemittel für die Deckplatte (12) ein ringförmiges, in die Deckplatte (12) eingearbeitetes Gebilde umfassen, das zum Begrenzen der seitlichen Bewegung der Deckplatte (12) bezüglich der Warmhalteschaleneinheit (7) eine entsprechende Form und Abmessung aufweist.

5. Drehbare Tisch-Warmhalteschale-Kombination nach Anspruch 2, dadurch gekennzeichnet, dass die Ausrichtemittel für die Deckplatte (12) ein ringförmiges, in die Deckplatte (12) eingearbeitetes Gebilde umfassen, das zum Begrenzen der seitlichen Bewegung der Deckplatte (12) bezüglich des Tisches (1) eine entsprechende Form und Abmessung aufweist.

6. Drehbare Tisch-Warmhalteschale-Kombination nach einem der vorangehenden Ansprüche, dadurch gekennzeichnet, dass Führungsmittel (6) zum Bregrenzen der seitlichen Bewegung der Warmhalteschaleneinheit (7) vorhanden sind, wenn diese auf den Tisch (1) aufgesetzt ist.

7. Drehbare Tisch-Warmhalteschale-Kombination nach Anspruch 6, dadurch gekennzeichnet, dass die Führungsmittel für die Warmhalteschaleneinheit (7) ein ringförmiges, in den Tisch (1) eingearbeitetes Gebilde umfassen das zum Bilden einer Sperre, welche die seitliche Bewegung der Warmhalteschaleneinheit (7) begrenzt, eine entsprechende Form und Abmessung aufweist.

8. Drehbare Tisch-Warmhalteschale-Kombination nach einem der vorangehenden Ansprüche, dadurch gekennzeichnet, dass der Tisch (1) ein konventioneller Tisch ist.

9. Drehbare Tisch-Warmhalteschale-Kombination nach einem der vorangehenden Ansprüche, dadurch gekennzeichnet, dass der Tisch (1) mit Schwenkrollen (5) ausgerüstet ist.

0 051 952

1